# EUROPÄISCHE PATENTSCHRIFT

(11) **EP 0 443 145 B1**
(45) Veröffentlichungstag und Bekanntmachung des Hinweises auf die Patenterteilung: **08.09.1993**
(21) Anmeldenummer: 90124323.8
(22) Anmeldetag: 15.12.1990
(51) Int. Cl.: A47G 7/08

(54) **Blumentopfanordnung**
Flower pot arrangement
Arrangement de pots à fleurs

(30) Priorität: 10.02.1990 DE 4004136
(43) Veröffentlichungstag der Anmeldung: 28.08.1991
(73) Patentinhaber: Höller, Josef, D-83661 Lenggries (DE)
(72) Erfinder: Höller, Josef, D-83661 Lenggries (DE)
(74) Vertreter: Flosdorff, Jürgen, Dr.

(56) Entgegenhaltungen:
- DE-C- 598 093
- US-A- 4 223 480
- US-A- 4 557 070

## Beschreibung

Die Erfindung betrifft eine Blumentopfanordnung mit einem Blumentopf und einem Übertopf, in den der Blumentopf aufnehmbar ist.

Es ist eine weit verbreitete Praxis, einen Blumentopf, der eine Pflanze enthält, in einen Übertopf einzusetzen, um beispielsweise das Erscheinungsbild zu verbessern oder auf diese Weise die Standsicherheit einer hochgewachsenen Pflanze zu erhöhen. Dabei besteht im allgemeinen das Problem, daß der Blumentopf in seiner Größe nicht auf den Übertopf abgestimmt ist, so daß der Blumentopf häufig entweder den Hohlraum des Übertopfs nur teilweise ausfüllt oder im Gegenteil ein wenig zu groß ist, so daß er sich in dem Übertopf verklemmt und über dessen oberen Randbereich hinausragt.

Dies hat nicht nur zur Folge, daß das angestrebte vorteilhafte Erscheinungsbild beeinträchtigt ist, sondern es kann erhebliche Schwierigkeiten bereiten, den eingeklemmten Blumentopf aus dem Übertopf zu entnehmen. Die Entnahme des Blumentopfs aus dem Übertopf ist aber auch in den Fällen umständlich und schwierig zu bewerkstelligen, in denen der Außendurchmesser des Blumentopfs kleiner als derjenige des Übertopfs ist, so daß bisweilen die einzige praktikable Möglichkeit darin besteht, die eingetopfte Pflanze in der Hoffnung nach oben zu ziehen, daß ihr der Blumentopf hierbei folgt.

Wenn der Blumentopf gegenüber dem Übertopf kein Übermaß aufweist, so daß er lose in den Übertopf einsetzbar ist, und wenn der Blumentopf zudem in seinem Boden ein Sickerloch aufweist, hat eine derartige Anordnung zudem bisher den Nachteil, daß unterhalb des Bodens des Blumentopfes praktisch kein Wasserstauraum zur Verfügung steht, da der Boden des Blumentopfs auf dem Boden des Übertopfs aufliegt. Damit kann überschüssiges Gießwasser nicht aus der Blumentopferde ablaufen, so daß sich nach einiger Zeit Wurzelfäulnis bei der Pflanze einstellen wird. Ein derartiger Schaden ließe sich grundsätzlich dadurch vermeiden, daß häufig kontrolliert wird, ob sich im Bodenbereich des Übertopfs Überschüssiges Gießwasser angesammelt hat, jedoch unterbleibt dies in der Praxis wegen der oben geschilderten Schwierigkeiten bei der Entnahme des Blumentopfes.

Aus der DE-C-598093 ist eine Blumentopfanordnung mit einem Blumentopf und einem Übertopf, in den der Blumentopf aufnehmbar ist, bekannt, wobei der Blumentopf an seinem oberen Randbereich mehrere in Umfangsrichtung beabstandete, nach außen weisende Vorspringe aufweist. Diese Vorsprünge liegen auf Haltenocken auf, die von der Innenwand des Übertopfs an entsprechenden Stellen nach innen weisen. Dabei enthält ein Vorsprung des Blumentopfs einen sich nach unten erstreckenden Zapfen, der in eine zum oberen Rand hin offene Aussparung eines zugeordneten Haltenockens des Übertopfs eingreift. Hierdurch hängt der Blumentopf einwandfrei und sicher in dem Übertopf und kann ungehindert von Frischluft umspült werden.

Der vorliegenden Erfindung liegt die Aufgabe zugrunde, eine Blumentopfanordnung der betrachteten Art so weiter zu entwickeln, daß der Blumentopf schnell und einfach aus dem Übertopf entnehmbar ist.

Diese Aufgabe wird erfindungsgemäß durch die im Kennzeichen des Patentanspruchs 1 angegebenen Merkmale gelöst. Vorteilhafte Weiterbildungen der Erfindung sind in den Unteransprüchen gekennzeichnet.

Bei der erfindungsgemäßen Blumentopfanordnung greifen die mehreren Vorsprünge des Blumentopfs, die sich vorzugsweise an zwei diametral gegenüberliegenden Stellen befinden, in Aussparungen des Übertopfs ein, die in der Wand des Übertopfs über die gesamte Dicke bis zur Außenseite des Übertopfs verlaufen, so daß die Vorsprünge mit ihren radial äußeren Flächen zur äußeren Seite des Übertopfs hin freiliegen. An den nach außen freiliegenden Flächen der Vorsprünge kann der Blumentopf erfaßt und aus dem Übertopf herausgehoben werden, was hiermit auf denkbar einfache Weise erfolgen kann.

Da der Blumentopf mit seinen Vorspringen auf den unteren Wandabschnitt der Aussparungen des Übertopfs aufliegt, ist durch geeignete Auswahl der Geometrie der Vorsprünge und der Aussparungen gewährleistet, daß die obere Kante des Blumentopfs geringfügig gegen die Oberkante des Übertopfs zurückversetzt ist, wodurch nicht nur ein makelloser optischer Eindruck entsteht, da der häufig aus einem unansehnlichen Material bestehende Blumentopf praktisch unsichtbar wird, sondern es kann bei optimaler Ausnutzung des Volumens des Übertopfs ein Überlaufen von Gießwasser zur Außenseite des Übertopfs hin vermieden werden.

Da bei der erfindungsgemäßen Blumentopfanordnung der Blumentopf in den Übertopf eingehängt ist, verbleibt bei einer geeigneten Höhendifferenz der beiden Töpfe zwischen der Unterseite des Bodens des Blumentopfs und der Oberseite des Bodens des Übertopfs ein Wasserstauraum, der in einer bevorzugten Ausgestaltung der Erfindung 5 bis 13 mm beträgt.

Mit Vorteil ist vorgesehen, daß die Vorsprünge an dem Blumentopf einstückig angeformte Griffnasen sind, die demnach ebenso wie der Blumentopf beispielsweise aus Kunststoff oder Ton bestehen. Wesentlich ist, daß die in Umfangsrichtung verlaufende Breite der Griffnasen etwas kleiner als die Breite der Aussparungen ist, so daß sich die Vorsprünge nicht in den Aussparungen verklemmen können.

Es liegt jedoch im Rahmen der Erfindung, daß die Vorsprünge mit geeigneten Befestigungsmitteln an dem Blumentopf angebracht, beispielsweise angeklebt sein können.

In einer besonders bevorzugten Ausführungsform der Erfindung hat der Übertopf einen nach außen abgestuften, vorzugsweise verdickten Randbereich, über dessen gesamte Höhe die Aussparungen verlaufen, so daß die Vorsprünge des Blumentopfs, die sich annähernd bis zur Außenfläche des abgestuften Randbereichs des Übertopfes erstrecken, mit ihrer Unterseite freiliegen, so daß die Vorsprünge zur Entnahme des Blumentopfs untergriffen werden können. Hierdurch ist die Entnahme des Blumentopfs weiter erleichtert.

Wenn die radial äußeren Flächen der beiden Vorsprünge in der Einbaulage, in der die Mittellängsachse des Blumentopfs mit derjenigen des Übertopfs zusammenfällt, um ein Maß gegenüber der Außenfläche des oberen Randbereichs des Übertopfs zurückversetzt sind, das der Differenz zwischen dem Innenradius des Übertopfs und dem Außenradius des Blumentopfs entspricht, ist mit Sicherheit ein Überstand eines Vorsprungs über die angrenzende Außenfläche des Übertopfs vermieden, so daß in diesem Bereich keine Verletzungsgefahr besteht. Die Außenfläche der beiden Vorsprünge hat zweckmäßigerweise die Form eines Zylinderabschnitts, die im wesentlichen mit der Form der angrenzenden Außenfläche des Übertopfs übereinstimmt.

Andererseits liegt es auch im Rahmen der Erfindung, daß die beiden Vorsprünge radial über die jeweils umgebenden Außenflächen des Übertopfes hinaus vorstehen können, so daß sie nicht nur untergriffen, sondern auch an ihren überstehenden SEitenkanten ergriffen werden können, was die Entnahme des inneren Pflanzentopfs erleichtern kann.

Weitere Merkmale, Vorteile und Einzelheiten der Erfindung ergeben sich aus der nachfolgenden Beschreibung einer bevorzugten Ausführungsform sowie anhand der Zeichnung. Dabei zeigen:
- Fig. 1: einen Vertikalschnitt durch eine Ausführungsform der erfindungsgemäßen Blumentopfanordnung;
- Fig. 2: eine Seitenansicht des oberen Randbereichs der Blumentopfanordnung gemäß Figur 1;
- Fig. 3: einen Horizontalschnitt durch den oberen Randbereich der blumentopfanordnung gemäß Fig. 1 und
- Fig. 4: eine abgewandelte Ausführungsform der Erfindung.

Die Blumentopfanordnung besteht aus einem Übertopf 1, in den ein Blumentopf 2 eingesetzt ist, der eine nicht dargestellte Pflanze enthält. Der Übertopf 1 und der Blumentopf 2 haben eine Kegelstumpfform mit parallelen Seitenwänden, zwischen denen ein geringfügiger Abstand von beispielsweise 2 mm verbleibt, damit der Innenraum des Übertopfs 1 optimal ausgenutzt ist.

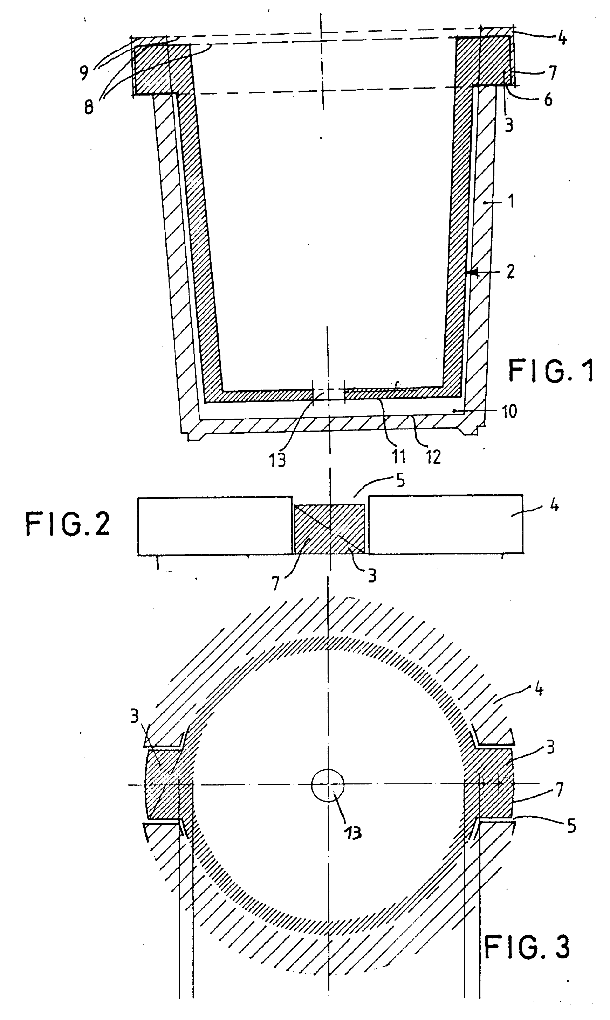

Im oberen Randbereich des Blumentopfs 2 sind zwei Griffnasen 3 angeformt, die an diametral gegenüberliegenden Stellen radial nach außen vorstehen und im Längsschnitt (Fig. 1) eine rechteckige Form haben. Der Übertopf 1 hat einen verdickten, nach außen vorstehenden Randabschnitt 4, in dem ebenfalls an diametral gegenüberliegenden Stellen zwei Aussparungen 5 ausgebildet sind, die sich über die gesamte Höhe des Randabschnitts 4 erstrecken, wie insbesondere Fig. 2 zeigt. Die Vorsprünge 3 stehen so weit radial nach außen vor, daß jeweils ein Abschnitt 6 ihrer Unterseite nach außen frei-liegt, so daß die Vorsprünge 3 hier untergriffen werden können, um den Blumentopf 2 aus dem Übertopf 1 herauszuheben. Außerdem liegen die radialen Außenflächen 7 der Vorsprünge 3 nach außen frei.

Der Blumentopf 2 ist somit mittels seiner Vorsprünge 3 in den Übertopf 1 eingehängt, wobei in dieser Lage die Oberkante 3 des Blumentopfs 2 geringfügig unterhalb der Oberkante 9 des Übertopfs 1 liegt. Dies hat unter anderem den Vorteil, daß bei einem ungeschickten Gießvorgang das Überlaufen von Gießwasser zur Außenseite des Übertopfs 1 hin weitestgehend durch die überstehende Randkante des oberen Randabschnitts 4 verhindert ist.

Außerdem ist durch das Einhängen des Übertopfs 2 ein Wasserstauraum 10 zwischen dem Boden 11 des Blumentopfs 2 und dem Boden 12 des Übertopfs 1 festgelegt. Dieser Wasserstauraum 10 kann durch ein Sickerloch 13 im Boden 11 des Blumentopfs 2 austretendes Gießwasser aufnehmen.

Wie Fig. 2 zeigt, haben die Vorsprünge 3 eine etwas geringere Breite als die Aussparung 5, so daß sich die Vorsprünge 3 nicht in den Aussparungen 5 verklemmen können. Die radiale Außenfläche 7 der Vorsprünge 3 hat im Grundriß eine Kreisbogenform, die in etwa der Kreisform der Außenfläche des oberen Randabschnitts 4 des Übertopfs 1 entspricht. Die radialen Außenflächen 7 der beiden Vorsprünge 3 sind jeweils um ein Maß gegenüber der angrenzenden Außenfläche der Randabschnitte 4 zurückversetzt, das dem Zwischenraum zwischen den Seitenwänden des Übertopfs 1 und des Blumentopfs 2 entspricht, so daß ausgeschlossen ist, daß ein Vorsprung 3 die angrenzende Außenfläche des oberen Randabschnitts 4 des Übertopfs 1 überragt.

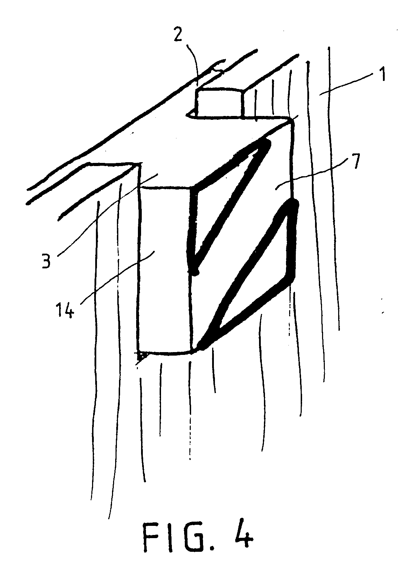

Bei der in Figur 4 dargestellten abgewandelten Blumentopfanordnung ist der Übertopf 1 nicht mit einem verdickten, nach außen vorstehenden Randabschnitt versehen, wie dies bei der vorstehend beschriebenen Ausführungsform der Fall ist, und die Griffnasen 3 stehen über die Außenfläche des Übertopfs 1 nach außen vor. Hierdurch können die Griffnasen 3 auch an ihren Seitenkanten 14 ergriffen werden, um den Blumentopf 2 aus dem Übertopf 1 zu entnehmen.

Die Höhe der Griffnasen 3 beträgt 1/5 der Höhe des Übertopfs und somit 3 c m, wenn der Übertopf eine Höhe von 15 cm hat. Die Breite der Griffnase beträgt 4/5 seiner Höhe, d.h. im vorstehenden Falle 2,4 cm. Die sich hieraus ergebende Ansichtsfläche kann auf besondere Weise optisch gestaltet werden.

Als Material für den Übertopf kommen außer Kunststoff und Ton vorzugsweise Keramik und Holz in Betracht.

Die Querschnittsform der beiden Töpfe ist nicht auf die dargestellte Kreisform beschränkt.

## Patentansprüche

1. Blumentopfanordnung mit einem Blumentopf und einem Übertopf, in den der Blumentopf aufnehmbar ist, wobei der Blumentopf an seinem oberen Randbereich mehrere in Umfangsrichtung beabstandete, nach außen weisende Vorsprünge aufweist, damit diese den Blumentopf abstützen können,
**dadurch gekennzeichnet**,
daß die Vorsprünge (3) in Aussparungen (5) des Übertopfs (1) eingreifen, die in der Wand des Übertopf (1) über die gesamte Dicke bis zur Außenseite des Übertopfs (1) verlaufen, so daß die Vorsprünge (3) mit ihren radial äußeren Flächen zur Außenseite des Übertopfs (1) hin freiliegen.

2. Blumentopfanordnung nach Anspruch 1,
dadurch gekennzeichnet, daß die Vorsprünge (3) an dem Blumentopf (2) einstückig angeformte Griffnasen sind.

3. Blumentopfanordnung nach Anspruch 1,
dadurch gekennzeichnet, daß die Vorsprünge mit Befestigungsmitteln an dem Blumentopf angebracht sind.

4. Blumentopfanordnung nach einem der Ansprüche 1 bis 3,
dadurch gekennzeichnet, daß zwei Vorsprünge (3) an diametral gegenüberliegenden Stellen radial nach außen vorstehen.

5. Blumentopfanordnung nach einem der Ansprüche 1 bis 4,
dadurch gekennzeichnet, daß der obere Randbereich (4) des Übertopfs (1) nach außen vorsteht, daß sich die Aussparungen (5) darin über die gesamte Höhe dieses Randbereichs (4) erstrecken und daß die Vorsprünge (3) soweit radial nach außen vorstehen, daß ein Teil ihrer Unterseite nach außen freiliegt.

6. Blumentopfanordnung nach einem der Ansprüche 1 bis 5,
dadurch gekennzeichnet, daß die radial äußeren Flächen (7) der beiden Vorsprünge (3) in der konzentrischen Einbaulage des Blumentopfs (2) um ein Maß gegenüber der Außenfläche des oberen Randbereichs (4) des Übertopfs (1) zurückversetzt sind, das der Differenz zwischen dem inneren Radius des Übertopfs (1) und dem Außenradius des Blumentopfs (2) entspricht.

7. Blumentopfanordnung nach einem der Ansprüche 1 bis 6,
dadurch gekennzeichnet, daß die Oberkante (8) des Blumentopfs (2) etwas tiefer verläuft als die Oberkante (9) des Übertopfs (1).

8. Blumentopfanordnung nach einem der Ansprüche 1 bis 7,
dadurch gekennzeichnet, daß zwischen der Oberseite des Bodens (12) des Übertopfs (1) und der Unterseite des Bodens (11) des Blumentopfs (2) ein Wasserstauraum (10) verbleibt.

9. Blumentopfanordnung nach einem der Ansprüche 1 bis 5 und 7 bis 8,
dadurch gekennzeichnet, daß die radial äußeren Flächen (7) der beiden Vorsprünge (3) in der konzentrischen Einbaulage des Blumentopfs (2) über die umgebende Außenfläche des Übertopfs (1) radial nach außen vorstehen.

10. Blumentopfanordnung nach einem der Ansprüche 1 bis 9,
dadurch gekennzeichnet, daß die Vorsprünge (3) eine Höhe haben, die 1/5 der Höhe des Übertopfs (1) beträgt, und daß ihre Breite 4/5 ihrer Höhe beträgt.

## Claims

1. A flowerpot assembly comprising a flowerpot and a flowerpot holder in which said flowerpot is received said flowerpot having several circumferentially spaced and outwardly extending projections on the upper portion thereof which are adapted to support the flowerpot,
**characterized in**
that said projections (3) engage with recesses (5) of said flowerpot holder (1) said recesses (5) extending through the whole thickness of the wall of the flowerpot holder (1) towards the outer surface therefrom, said projections (3) having radial outer surfaces (7) exposed to the outside of said flowerpot holder (1).

2. A flowerpot assembly as defined in claim 1,
characterized in that said projections (3) are grip noss formed integrally on said flowerpot (2).

3. A flowerpot assembly as defined in claim 1,
characterized in that said projections are secured to said flowerpot with the aid of fastening means.

4. A flowerpot assembly as defined in any of claims 1 to 3,
characterized in that two projections (3) project radially outwards at diametrically opposed places.

5. A flowerpot assembly as defined in any of claims 1 to 4,
characterized in that said upper edge portion (4) of said flowerpot holder (1) projects outwardly, that said recesses (5) extend over the entire height of said edge portion (4), and that said projections (3) project radially outwards to such an extend that part of their bottom side (6) is exposed to the outside.

6. A flowerpot assembly as defined in any of claims 1 to 5,
characterized in that in the concentric mounted state of said flowerpot (2) the radially outer surface (7) of said two projections (3) are set back relative to the outer surface of said upper edge portion (4) of said flowerpot holder (1) to a degree corresponding to the difference between the inner radius of said flowerpot holder (1) and the outer radius of said flowerpot (2).

7. A flowerpot assembly as defined in any of claims 1 to 6,
characterized in that the upper edge (8) of said flowerpot (2) extends slightly below the upper edge (9) of said flowerpot holder (1).

8. A flowerpot assembly as defined in any of claims 1 to 7,
characterised in that a water accumulation chamber (10) is defined between the upper surface of the bottom (12) of said flowerpot holder (1) and the lower surface of the bottom (11) of said flowerpot (2).

9. A flowerpot assembly as defined in any of claims 1 to 5 and 7 to 8,
characterized in that in the concentric mounted state of said flowerpot (2), the radially outer surfaces (7) of said two projections (3) project radially outwards beyond the surround outer surface of said flowerpot holder (1).

10. A flowerpot assembly as defined in any of claims 1 to 9,
characterized in that said projections (3) have a height which is 1/5 of the height of said flowerpot holder (1), and that their width is 4/5 of their height.

## Revendications

1. Arrangement de pots à fleurs comprenant un pot à fleurs et un cache-pot, dans lequel peut être placé le pot à fleurs, celui-ci portant sur la zone de bord supérieure plusieurs saillants séparés en direction circonférentielle, qui se pointent vers l'extérieur, pour pouvoir supporter le pot à fleurs,
**caractérisé en**
ce que les saillants (3) engrènent dans des évidements (5) du cache-pot (1), qui se trouvent dans la paroi du cache-pot (1) sur toute l'épaisseur jusqu'au côté extérieur du cache-pot (1), de telle façon que les saillants (3) sont dégagés avec leur faces radiales extérieures vers l'extérieur du cache-pot (1).

2. Arrangement de pots à fleurs selon la revendication 1,
caractérisé en ce que les saillants (3) du pot à fleurs (2) sont des nez à poignée constitués d'une pièce.

3. Arrangement de pots à fleurs selon la revendication 1,
caractérisé en ce que les saillants sont fixés avec des pièces de fixation au pot à fleurs.

4. Arrangement de pots à fleurs selon les revendications 1 à 3,
caractérisé en ce que deux saillants (3) dépassent radialement vers l'extérieur sur des parties diamétralement opposées.

5. Arrangement de pots à fleurs selon les revendications 1 à 4,
caractérisé en ce que la zone de bord supérieure (4) du cache-pot (1) dépasse vers l'extérieur, que les évidements (5) s'y étendent sur toute la hauteur de cette zone de bord (4), et que les saillants (3) dépassent radialement autant vers l'extérieur qu'une partie de leur face inférieure est dégagée vers l'extérieur.

6. Arrangement de pots à fleurs selon les revendications 1 à 5,
caractérisé en ce que les faces radiales extérieures (7) des deux saillants (3) sont déplacées dans la position de l'installation concentrique du pot à fleurs (2) d'une mesure par rapport à la face extérieure de la zone de bord supérieure du cache-pot, qui correspend à la différence entre le radius intérieur du cache-pot (1) et le radius extérieur du pot à fleurs (2).

7. Arrangement de pots à fleurs selon les revendications 1 à 6,
caractérisé en ce que le bord supérieur (8) du pot à fleurs (2) se trouve un peu plus bas que le bord supérieur (9) du cache-pot (1).

8. Arrangement de pots à fleurs selon les revendications 1 à 7,
caractérisé en ce qu'entre le côté supérieur du fond (12) du cache-pot (1) et le côté inférieur du fond (11) du pot à fleurs (2) reste un espace pour retenir l'eau (10).

9. Arrangement de pots à fleurs selon les revendications 1 à 5 et 7 à 8,
caractérisé en ce que les faces radiales extérieures (7) des deux saillants (3) dans l'installation concentrique du pot à fleurs (2) dépassent la face extérieure du cache-pot (1), qui les cerne de façon radiale, vers l'extérieur.

10. Arrangement de pots à fleurs selon les revendications 1 à 9,
caractérisé en ce que les saillants (3) s'élèvent à une hauteur d'un cinquième du cache-pot (1) et d'une largeur de quatre cinquièmes de sa hauteur.
